# EUROPEAN PATENT APPLICATION

(11) **EP 2 535 319 A2**
(43) Date of publication of application: **19.12.2012**
(21) Application number: 12171625.2
(22) Date of filing: 12.06.2012
(51) Int. Cl.: C03B 37/027, G02B 6/02

(54) **Method for producing optical fiber**

(30) Priority: 15.06.2011 JP 2011133307
(71) Applicant: Sumitomo Electric Industries, Ltd., Osaka-shi, Osaka 541 (JP)
(72) Inventor: Haruna, Tetsuya, Kanagawa (JP); Hirano, Masaaki, Kanagawa (JP); Tamura, Yoshiaki, Kanagawa (JP)
(74) Representative: HOFFMANN EITLE

(57) **Abstract**

There is provided a method for producing an optical fiber having low attenuation, the optical fiber including a core that contains an alkali metal element. An optical fiber preform that includes a core part and a cladding part is drawn with a drawing apparatus to form an optical fiber, the core part having an average concentration of an alkali metal element of 5 atomic ppm or more. During the drawing, the time the temperature of glass is maintained at 1500°C or higher is 110 minutes or less. The drawing speed is preferably 1200 m/min or more and more preferably 1500 m/min to 2300 m/min. The optical fiber preform preferably has a diameter of 70 mm to 170 mm and more preferably 90 mm to 150 mm.

## Description

### BACKGROUND OF THE INVENTION

### Field of the Invention

The present invention relates to a method for producing an optical fiber.

### Description of the Related Art

Optical fibers including cores that contain alkali metal elements are known (see Japanese Unexamined Patent Publication (Translation of PCT Application) Nos. 2005-537210, 2007-504080, 2008-536190, 2009-541796, 2010-501894, and 2010-526749, U.S. Patent Application Publication No. 2006/0130530, U.S. Pat. No. 5146534, and International Publication No. 98/002389). It is believed that the incorporation of an alkali metal element into a core reduces the viscosity of the core in drawing an optical fiber preform to produce an optical fiber and allows the relaxation of the glass network structure to proceed, thereby reducing the attenuation of the optical fiber.

In addition, optical fibers including cores that are composed of pure silica glass free from an alkali metal element are known as other low-loss optical fibers. It is known that in the production of such an optical fiber, an annealing furnace is arranged below a drawing furnace to prolong the heating time in order to promote the relaxation of the glass network structure.

### SUMMARY OF THE INVENTION

It is an object of the present invention to provide a method for producing an optical fiber including a core that contains an alkali metal element, the optical fiber having low attenuation.

According to an aspect of the present invention, a method for producing an optical fiber includes drawing a silica-based optical fiber preform that includes a core part and a cladding part, the core part having an average concentration of an alkali metal element of 5 atomic ppm or more, in which the time the temperature of glass is maintained at 1500°C or higher during the drawing is 110 minutes or less.

In the method for producing an optical fiber according to an embodiment of the present invention, the average concentration of the alkali metal element in the core part of the optical fiber preform is preferably 500 atomic ppm or less. Preferably, the core part of the optical fiber preform contains the alkali metal element and a halogen element, and the average concentration of an additive element other than these elements in the core part is equal to or lower than the average concentration of the halogen element in the core part. The average concentration of the halogen element in the core part of the optical fiber preform is preferably in the range of 1,000 atomic ppm to 20,000 atomic ppm. The alkali metal element is preferably potassium.

In the method for producing an optical fiber according to an embodiment of the present invention, the drawing speed during the drawing of the optical fiber preform is preferably 1200 m/min or more and more preferably in the range of 1200 m/min to 2500 m/min. The optical fiber preform preferably has a diameter of 70 mm to 170 mm. The drawing tension (a force applied to a glass portion) during the drawing of the optical fiber preform is preferably in the range of 30 g (0.29 N) to 150 g (1.47 N).

In the method for producing an optical fiber according to an embodiment of the present invention, preferably, during the drawing of the optical fiber preform, the drawn glass fiber having a diameter of 200 µm or less is heated at 1500°C or higher for 0.3 seconds or less, and the residence time in which an individual position of the optical fiber preform stays in a drawing furnace is 4 hours or less. More specifically, the residence time is defined as the length of time from the time when one position of the optical fiber preform passes through the upper end of the drawing furnace to the time when the position passes through the lower end of the drawing furnace. The drawn glass fiber having a diameter of 200 µm or less is heated at 1500°C or higher for preferably 0.01 seconds or more. In the drawing of the optical fiber preform, the residence time of any position of the optical fiber preform in the drawing furnace is preferably 4 hours or less.

A method for producing an optical fiber according to an embodiment of the present invention is a method for producing an optical fiber that includes a core part and a cladding part surrounding the core part, in which the core part of the optical fiber preform has an average concentration of an alkali metal of 5 atomic ppm or less and an average concentration of a halogen element of 1000 atomic ppm or more, the average concentration of an additive element other than the alkali metal or the halogen element in the core part is equal to or lower than the average concentration of the halogen element in the core part, the optical fiber preform has a diameter of 70 mm to 170 mm, the drawing speed of the optical fiber when the optical fiber is drawn is 600 m/min or more, and a force applied to a glass portion is in the range of 30 g (0.29 N) to 150 g (1.47 N). The drawing speed of the optical fiber is preferably in the range of 1200 m/min to 3000 m/min.

Furthermore, there is provided an optical fiber produced by the method for producing an optical fiber according to an embodiment of the present invention, in which the optical fiber has an attenuation of 0.18 dB/km or less at 1550 nm.

According to an embodiment of the present invention, it is possible to produce an optical fiber having low attenuation, the optical fiber including a core that contains an alkali metal element.

### BRIEF DESCRIPTION OF THE DRAWINGS

Figure 1A is a graph illustrating a refractive index profile and a concentration distribution of an alkali metal element of an optical fiber preform, and Fig. 1B is a graph illustrating a refractive index profile, a concentration distribution of an alkali metal element, an optical power distribution of an optical fiber.

Figure 2 is a graph illustrating the relationship between the length of time the temperature of glass is maintained at 1500°C or higher in a drawing furnace and the attenuation of an optical fiber at a wavelength of 1.55 µm.

Figure 3 is a conceptual view of a drawing apparatus.

Figure 4 is a conceptual view illustrating time T1 the temperature of glass is maintained at 1500°C or higher in a drawing apparatus.

Figure 5 is a conceptual view illustrating residence time T2 in the drawing furnace of the drawing apparatus.

Figure 6 is a graph illustrating the relationship between the drawing speed and the attenuation of an optical fiber at a wavelength of 1.55 µm.

Figure 7 is a graph illustrating the relationship between the drawing speed and the attenuation of an optical fiber at a wavelength of 1.55 µm.

Figure 8 is a graph illustrating the relationship between the diameter of an optical fiber preform and the attenuation of an optical fiber at a wavelength of 1.55 µm.

Figure 9 is a graph illustrating the relationship between the residence time in a drawing furnace and the attenuation of an optical fiber at a wavelength of 1.55 µm.

Figure 10 is a graph illustrating the refractive index profile of an optical fiber.

Figure 11 is a graph illustrating the refractive index profile of an optical fiber.

Figure 12 is a conceptual view illustrating other examples of the refractive index profile of an optical fiber.

Figure 13 is a graph illustrating a residual stress in a glass portion of an optical fiber with a force applied to glass during drawing as a parameter.

Figure 14 is a conceptual view illustrating a residual stress of an optical fiber.

Figure 15 is a conceptual view illustrating another drawing apparatus.

### DESCRIPTION OF THE PREFERRED EMBODIMENTS

Embodiments of the present invention will be described below with reference to the attached drawings. The drawings are provided for illustrative purposes and are not intended to limit the scope of the invention. In the drawings, the same elements are designated using the same reference numerals, and redundant description is not repeated. The ratios of dimensions in the drawings are not always the same as those of the actual objects described in the respective drawings.

According to findings of the inventors, in the case of producing an optical fiber including a core that contains an alkali metal element, when a heating time is prolonged by arranging an annealing furnace below a drawing furnace as in the production of an optical fiber composed of pure quartz,, the resulting optical fiber has an increased attenuation, in some cases. Thus, in a method for producing an optical fiber according to the present invention, when an optical fiber preform including a core that contains an alkali metal element is drawn, a time that the optical fiber preform is heated in a drawing furnace is reduced.

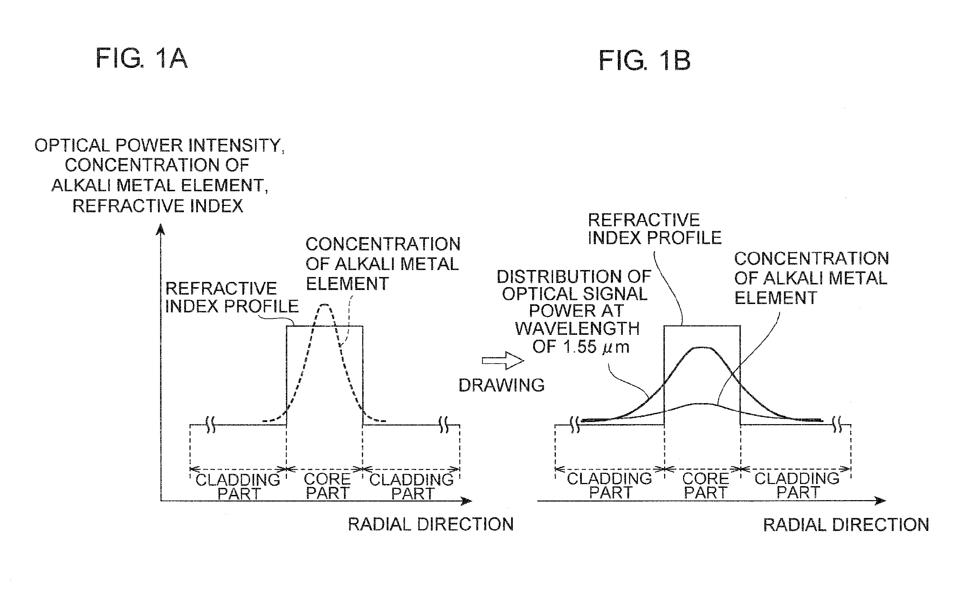

Figure 1A is a graph illustrating a refractive index profile and a concentration distribution of an alkali metal element of an optical fiber preform. Figure 1B is a graph illustrating a refractive index profile, a concentration distribution of an alkali metal element, an optical power distribution of an optical fiber. A mechanism for a reduction in the attenuation of an optical fiber when the heating time during drawing is short is unclear and is thought as follows: A prolonged heating time during drawing allows the diffusion of an alkali metal element incorporated into a core to proceed, so that the alkali metal element diffuses widely to extend outwardly to a position three or more times the mode field diameter (MFD) of a communication wavelength region (1550-nm band). As illustrated in Fig. 1B, the effective concentration of the alkali metal element is thus reduced in the core of the optical fiber. Thereby, the relaxation of the glass network structure does not proceed, thus failing to reduce the attenuation of the optical fiber.

In a method for producing an optical fiber according to an embodiment of the present invention, the average concentration of an alkali metal element (for example, potassium) added to a core of an optical fiber preform is 5 atomic ppm or more and preferably 50 atomic ppm or less in order to suitably achieve a reduction in loss. A higher potassium concentration results in a higher loss due to radiation exposure. Thus, the upper limit of the average potassium concentration in the core is 500 atomic ppm. The time the temperature of glass is maintained at 1500°C or higher in a drawing furnace is 110 minutes or less. The drawing speed is preferably 1200 m/min or more and more preferably 1500 m/min to 2300 m/min. The optical fiber preform preferably has a diameter of 70 mm to 170 mm and more preferably 90 mm to 150 mm.

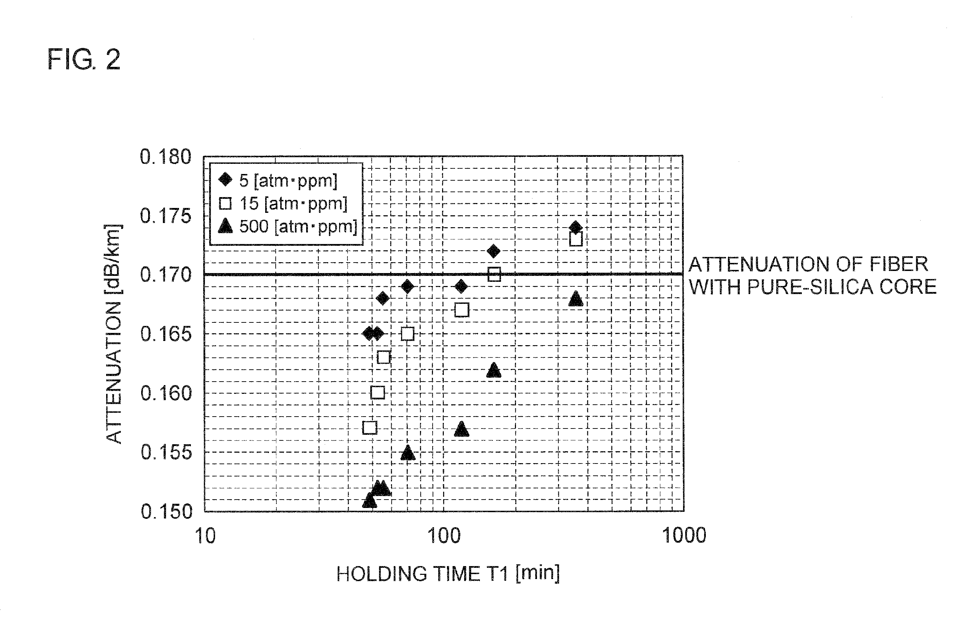

Figure 2 is a graph illustrating the relationship between time T1 the temperature of glass is maintained at 1500°C or higher in a drawing furnace and the attenuation of an optical fiber at a wavelength of 1.55 µm with the average potassium concentration in a core of an optical fiber preform as a parameter. Attenuations at measurement points are described in Table I.

**Table I**

| Holding time at 1500°C or higher min | Attenuation dB/km | | |
|---|---|---|---|
| | Average potassium concentration 5 atm·ppm | Average potassium concentration 15 atm·ppm | Average potassium concentration 500 atm·ppm |
| 360 | 0.174 | 0.173 | 0.168 |
| 163 | 0.172 | 0.170 | 0.162 |
| 119 | 0.169 | 0.167 | 0.157 |
| 71 | 0.169 | 0.165 | 0.155 |
| 56 | 0.168 | 0.163 | 0.152 |
| 53 | 0.165 | 0.160 | 0.152 |
| 49 | 0.165 | 0.157 | 0.151 |

In this case, the optical fiber preform had a diameter of 140 mm. The drawing tension during the drawing of the optical fiber preform was 30 g (0.29 N) to 150 g (1.47 N). The glass fiber having a diameter of 200 µm or less was heated at 1500°C or higher for 0.01 seconds to 0.3 seconds.

The core part of the drawn optical fiber is composed of a silica-based glass containing potassium, chlorine, and fluorine. The cladding part is composed of a silica-based glass containing fluorine and chlorine. The core part had an average potassium concentration of 0.1 atomic ppm to 100 atomic ppm. The core part of the drawn optical fiber had an average chlorine concentration of about 10,000 atomic ppm. The core part does not substantially contain dopants, such as a transition metal and GeO₂, other than potassium, chlorine, and fluorine. The concentration of the dopants other than potassium, chlorine, and fluorine in the core part is 1 ppm or less.

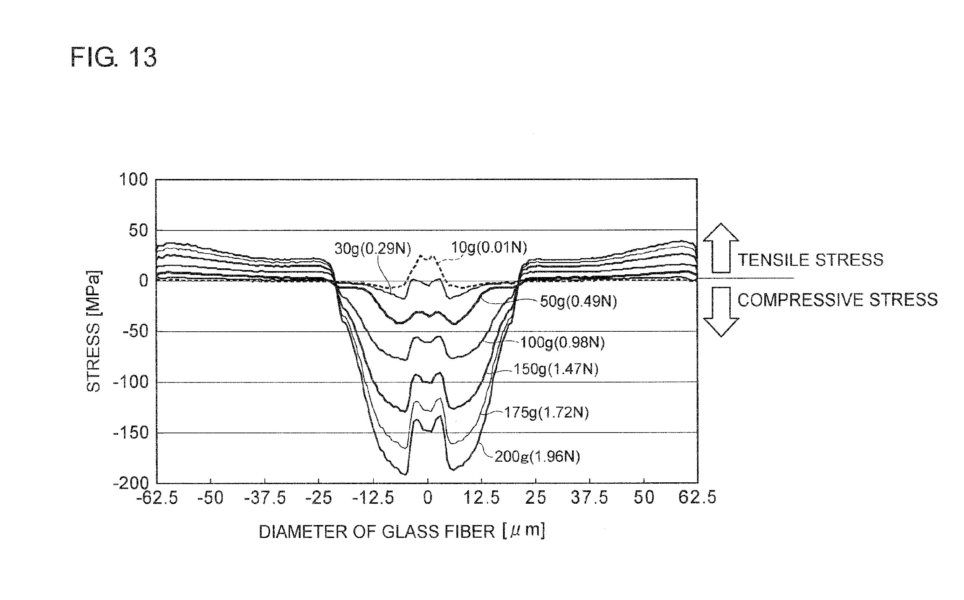

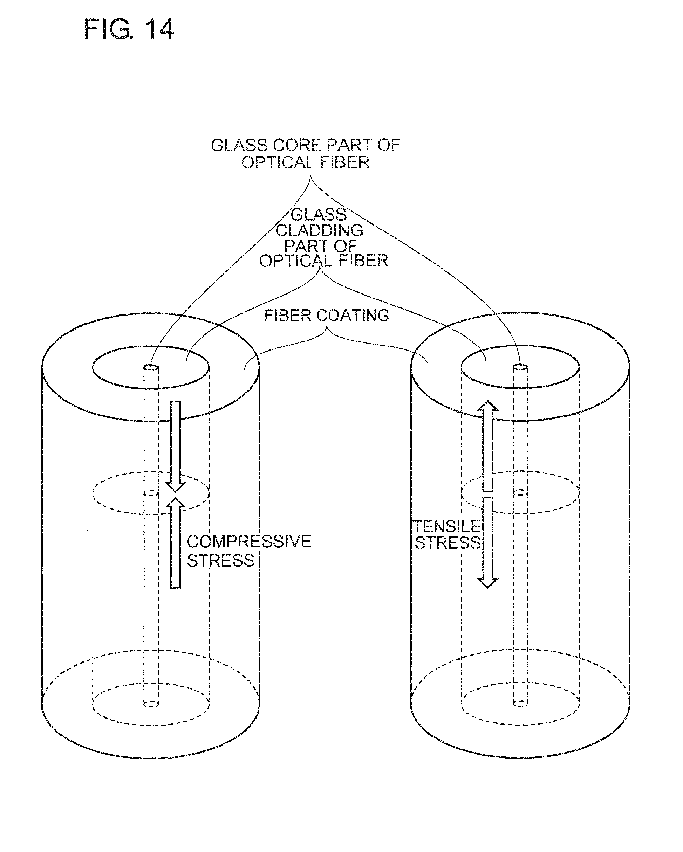

When the drawing tension during the drawing of the optical fiber preform is higher or lower than the range of 30 g (0.29 N) to 150 g (1.47 N), the attenuation of the optical fiber is increased. Figure 13 illustrates a residual stress in a glass portion of an optical fiber drawn from an optical fiber preform that includes a core having an average potassium concentration of 5 atomic ppm with a force applied to glass during drawing as a parameter. A negative stress value indicates a compressive residual stress. A positive stress value indicates a tensile residual stress. As illustrated in Fig. 14, the stress remains in the longitudinal direction when the fiber is regarded as a cylinder.

As illustrated in Fig. 13, an increase in tension results in an increase in compressive stress in the core of the optical fiber. For example, Fig. 13 demonstrates that the compressive stress values at the center portion of the core are -4 MPa at a force applied to a glass portion of 30 g (0.29 N) and -148 MPa at 200 g (1.96 N). Meanwhile, when the force applied to the glass portion is reduced to 10 g (0.098 N), a tensile stress remains in the core part which guides an optical signal. Thus, a peripheral glass portion including the core part is stretched to increase the amount of glass defects, thereby disadvantageously increase the attenuation. Furthermore, from a production point of view, a reduction in tension applied to the glass is liable to cause the fiber to sway below the drawing furnace, thereby easily breaking the fiber. Accordingly, drawing under low tension to the glass is not suitable from the viewpoint of yield.

An increase in tension applied to the glass increases the amount of residual stress change around the core. For example, the maximum amount of stress change per micrometer in a region extending from the center of the core to a radius of 15 µm (the region with a diameter of three times the MFD) is 16 MPa/µm at a force applied to the glass of 150 g (1.47 N). However, the maximum amounts of stress change per micrometer are 25 and 23 MPa/µm at 175 g (1.72 N) and 200 g (1.96 N), respectively. That is, the change in stress is significantly increased in the radial direction. This leads to a nonuniform glass structure, thereby disadvantageously increasing the attenuation. Accordingly, an optimum force applied to the glass during drawing is in the range of 30 g (0.29 N) to 150 g (1.47 N).

Figure 2 demonstrates that a reduction in the time the optical fiber preform is maintained at 1500°C or higher results in a reduction in the attenuation of the optical fiber at a wavelength of 1.55 µm. In the case where the core of an optical fiber preform has an average potassium concentration of 500 atomic ppm or less, the fictive temperature of an optical fiber formed by drawing the optical fiber preform is in the range of 1400°C to 1550°C. The diffusion of potassium proceeds in the drawing furnace during the time the glass is maintained at a temperature between the peak temperature (1500°C or higher) and 1500°C. When potassium is excessively diffused, potassium is widely distributed even in a region outside an optical power distribution in the communication wavelength band (1550-nm band). As a result, the effective potassium concentration is reduced, so that the relaxation of the glass network structure does not proceed, failing to reduce the attenuation of the optical fiber. It is thus believed that when the time the glass temperature is maintained at 1500°C or higher, at which the diffusion of potassium is more likely to proceed, is reduced, the optical attenuation is reduced. As illustrated in Fig. 2 and Table I, in order to achieve an attenuation of less than 0.170 dB/km, which is the attenuation of a pure-silica optical fiber including a core part free from an alkali metal element, the length of time the glass temperature is maintained at 1500°C or higher needs to be 110 minutes or less and preferably 70 minutes or less.

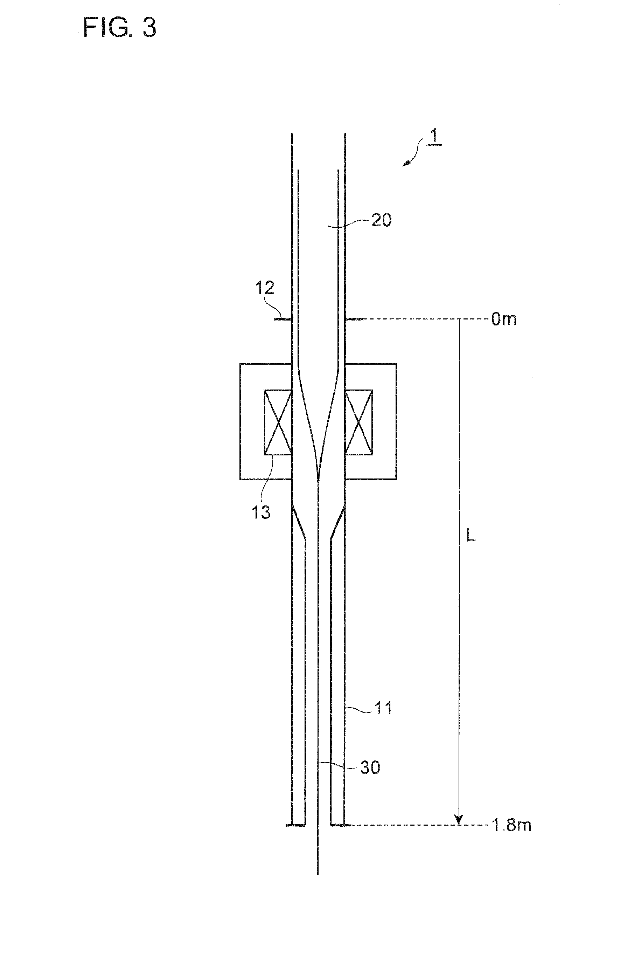

Figure 3 is a conceptual view of a drawing apparatus 1. The drawing apparatus 1 includes a drawing furnace 11 and a heater 13 arranged around the drawing furnace 11. In the drawing apparatus 1, the lower end of an optical fiber preform 20 inserted from the top is melted by heating and drawn to produce an optical fiber 30. The drawing furnace 11 is filled with a He atmosphere. Length L (length from an upper flange 12 to the lower end) is, for example, 1.8 m.

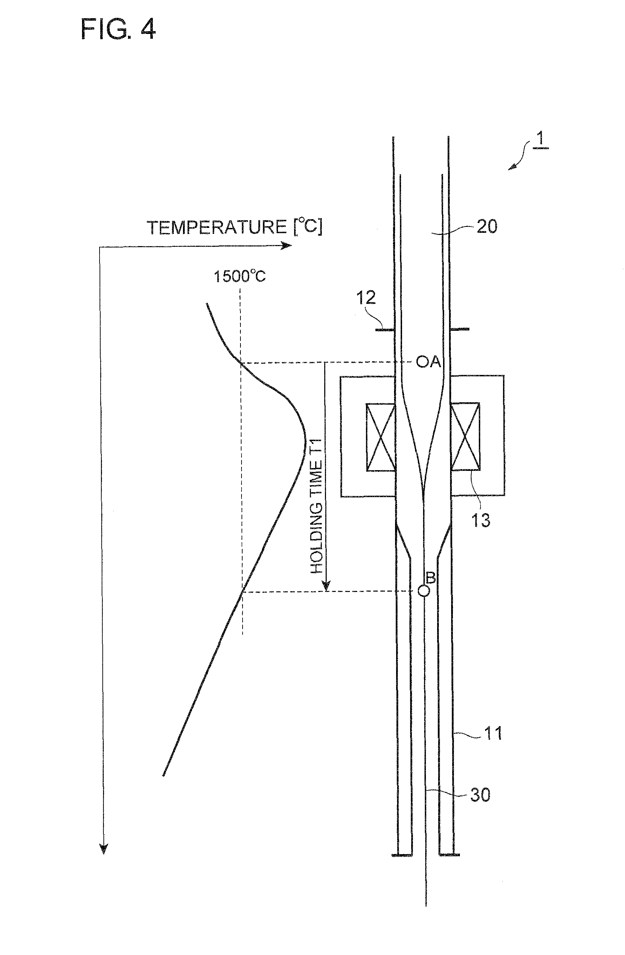

Figure 4 is a conceptual view illustrating time T1 the temperature of glass is maintained at 1500°C or higher in the drawing apparatus 1. With respect to the glass temperature distribution in the drawing apparatus 1, the maximum temperature is obtained at a position where the heater 13 is arranged. The temperature decreases with increasing distance from the position. Time T1 the temperature of glass is maintained at 1500°C or higher is defined as the length of time from the time when a temperature at position A of the optical fiber preform 20 is increased to reach 1500°C to the time when the temperature is reduced from the maximum temperature to 1500°C at a position B to which position A descends by drawing.

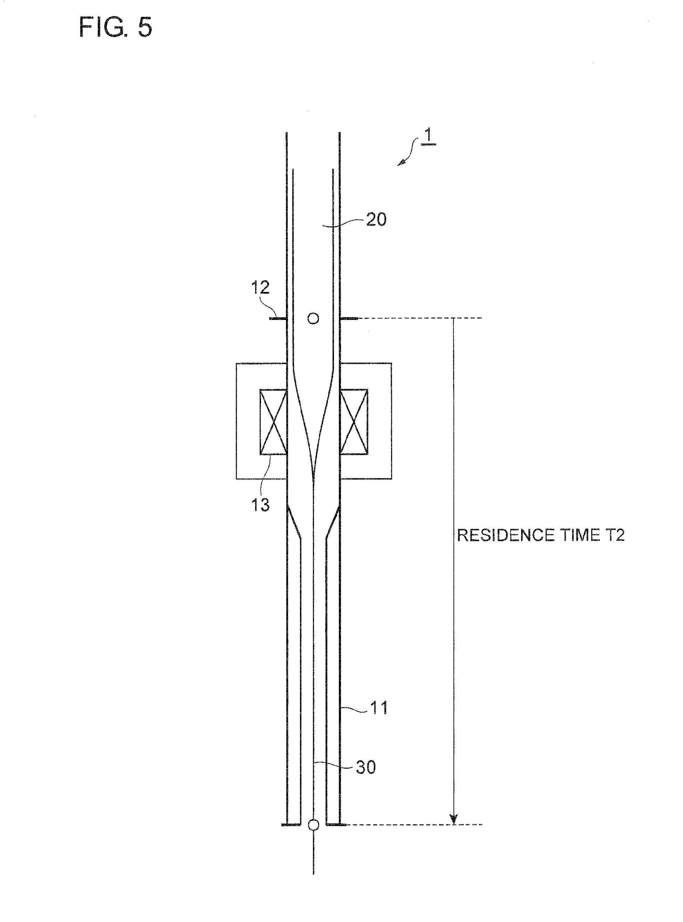

Figure 5 is a conceptual view illustrating residence time T2 in the drawing furnace of the drawing apparatus 1. Residence time T2 in the drawing furnace of the drawing apparatus 1 is defined as the length of time from the time when a position of the optical fiber preform 20 passes through the upper flange 12 to the time when the position passes through the lower end of the drawing furnace 11 by drawing.

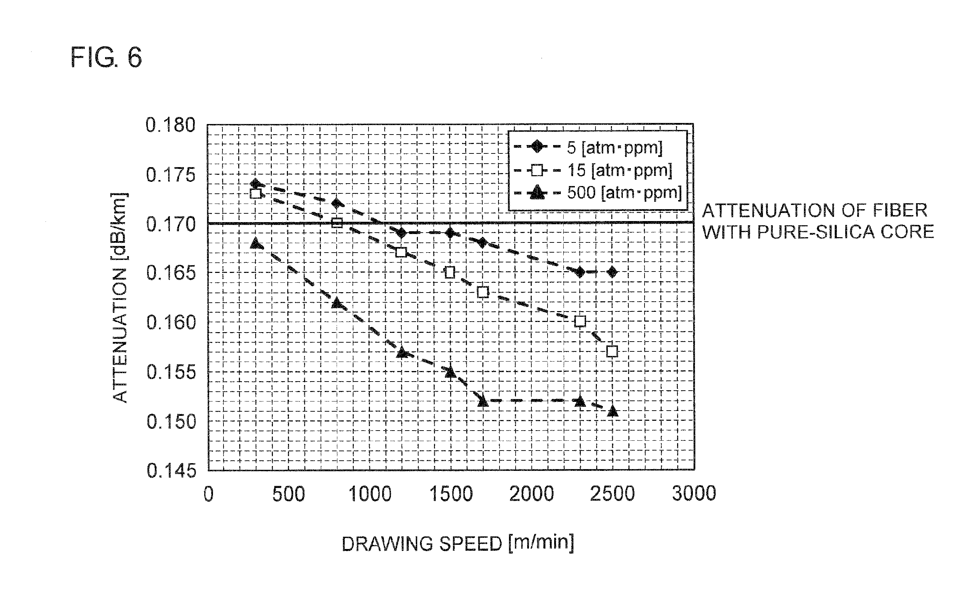

Figure 6 is a graph illustrating the relationship between the drawing speed and the attenuation of an optical fiber at a wavelength of 1.55 µm with the average potassium concentration in a core of an optical fiber preform as a parameter. Attenuations at measurement points are described in Table II.

**Table II**

| Drawing speed m/min | Attenuation dB/km | | |
|---|---|---|---|
| | Average potassium concentration 5 atm·ppm | Average potassium concentration 15 atm·ppm | Average potassium concentration 500 atm·ppm |
| 300 | 0.174 | 0.173 | 0.168 |
| 800 | 0.172 | 0.170 | 0.162 |
| 1200 | 0.169 | 0.167 | 0.157 |
| 1500 | 0.169 | 0.165 | 0.155 |
| 1700 | 0.168 | 0.163 | 0.152 |
| 2300 | 0.165 | 0.160 | 0.152 |
| 2500 | 0.165 | 0.157 | 0.151 |

Also in this case, the optical fiber preform had a diameter of 140 mm.

As illustrated in Fig. 6, in order to achieve an attenuation of less than 0.170 dB/km, which is the attenuation of a pure-silica optical fiber including a core part free from an alkali metal element, in the case where the core of the optical fiber preform has an average potassium concentration of 5 atomic ppm, the drawing speed needs to be at least 1200 m/min or more and preferably 1500 m/min.

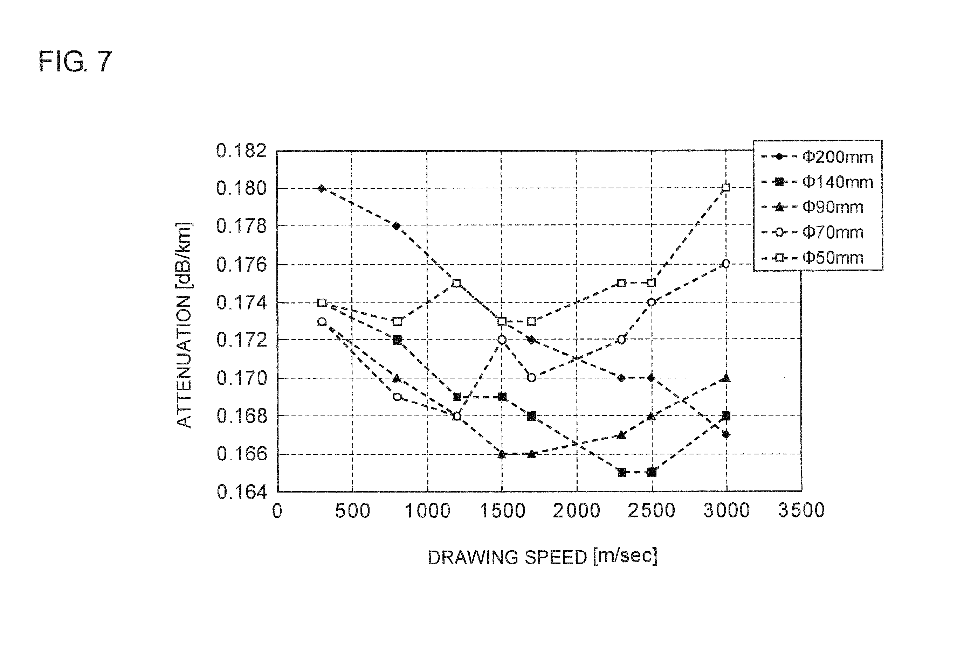

An optical fiber preform is drawn with the drawing apparatus 1 illustrated in Fig. 3. The drawing furnace 11 has a length of 1.8 m. Figure 7 is a graph illustrating the relationship between the drawing speed and the attenuation of an optical fiber at a wavelength of 1.55 µm with the diameter of the optical fiber preform as a parameter. Attenuations at measurement points are described in Table III.

**Table III**

| Drawing speed m/min | Attenuation dB/km | | | | |
|---|---|---|---|---|---|
| | 200 (mm, in diameter) | 140 (mm, in diameter) | 90 (mm, in diameter) | 70 (mm, in diameter) | 50 (mm, in diameter) |
| 300 | 0.180 | 0.174 | 0.173 | 0.173 | 0.174 |
| 800 | 0.178 | 0.172 | 0.170 | 0.169 | 0.173 |
| 1200 | 0.175 | 0.169 | 0.168 | 0.168 | 0.175 |
| 1500 | 0.173 | 0.169 | 0.166 | 0.172 | 0.173 |
| 1700 | 0.172 | 0.168 | 0.166 | 0.170 | 0.173 |
| 2300 | 0.170 | 0.165 | 0.167 | 0.172 | 0.175 |
| 2500 | 0.170 | 0.165 | 0.168 | 0.174 | 0.175 |
| 3000 | 0.167 | 0.168 | 0.170 | 0.176 | 0.180 |

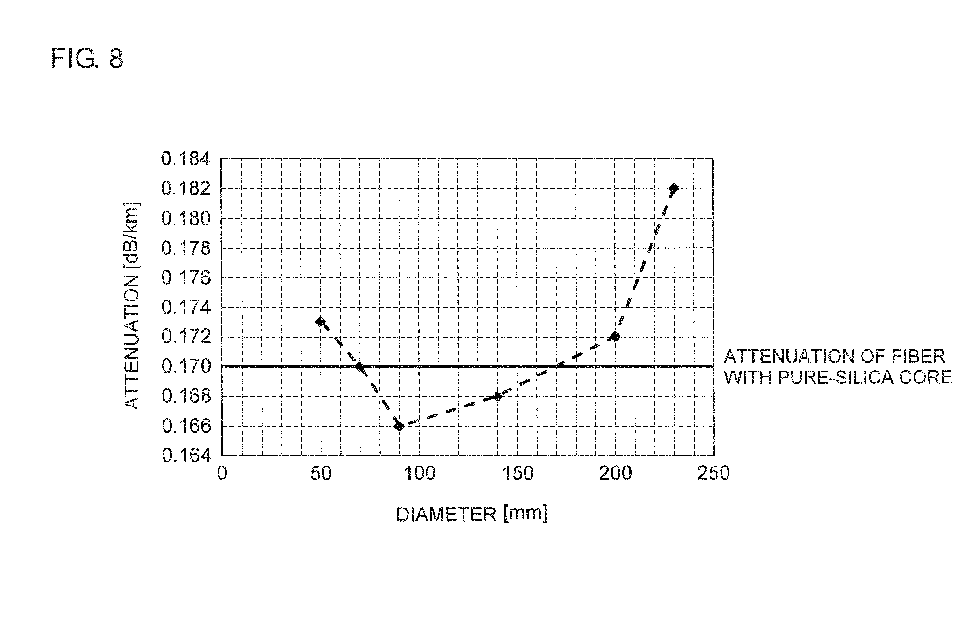

Figure 8 is a graph illustrating the relationship between the diameter of an optical fiber preform and the attenuation of an optical fiber at a wavelength of 1.55 µm when drawing is performed at a drawing speed of 1700 m/min and a drawing tension of 50 g (0.49 N). The core of the optical fiber has an average potassium concentration of 5 atomic ppm.

As illustrated in Figs. 7 and 8, in the case where the optical fiber preform has a small diameter, an increase in drawing speed increases the attenuation of the optical fiber. In the case where the optical fiber preform has a large diameter of 200 mm or more, the residence time of the optical fiber preform in the furnace is long, thereby allowing the diffusion of potassium to proceed to increase the attenuation of the optical fiber. However, in all cases, the attenuation is 0.18 dB/km or less.

An increase in drawing speed enables the diffusion of potassium to be inhibited. However, the upper limit of the drawing speed is 3000 m/min from the viewpoint of productivity and the power of the drawing furnace. Thus, the optical fiber preform preferably has a diameter of 70 mm to 170 mm and more preferably 90 mm to 150 mm. The drawing speed is preferably in the range of 1200 m/min to 2500 m/min and more preferably 1500 m/min to 2300 m/min.

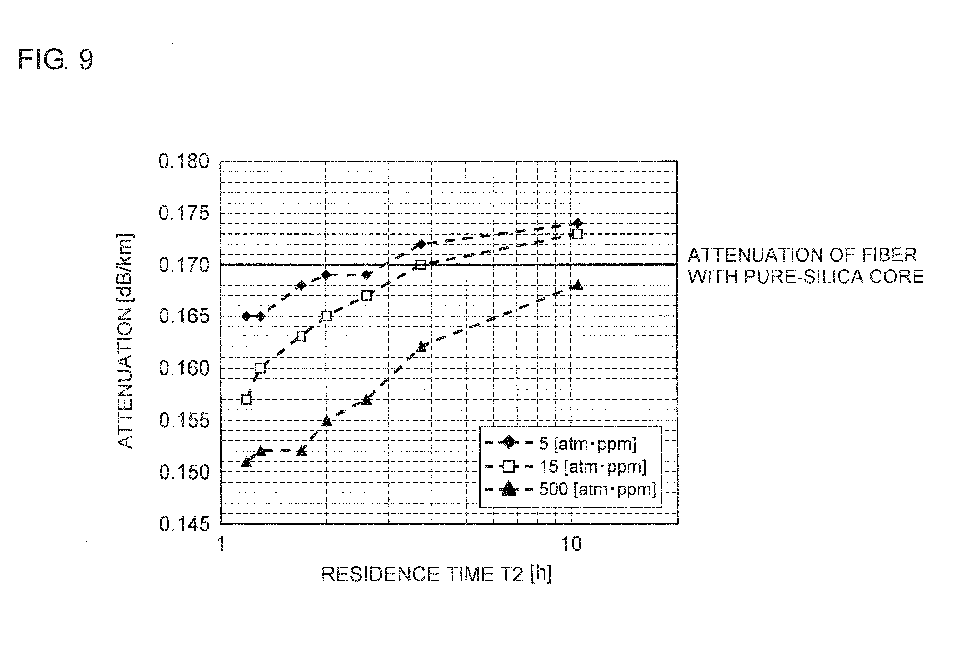

Figure 9 is a graph illustrating the relationship between residence time T2 in the drawing furnace, which is defined in Fig. 4, and the attenuation of an optical fiber at a wavelength of 1.55 µm with the potassium concentration as a parameter. Attenuations at measurement points are described in Table IV.

**Table IV**

| Residence time in furnace hour | Attenuation dB/km | | |
|---|---|---|---|
| | Average potassium concentration 5 atm·ppm | Average potassium concentration 15 atm·ppm | Average potassium concentration 500 atm·ppm |
| 10.4 | 0.174 | 0.173 | 0.168 |
| 3.7 | 0.172 | 0.170 | 0.162 |
| 2.6 | 0.169 | 0.167 | 0.157 |
| 2.0 | 0.169 | 0.165 | 0.155 |
| 1.7 | 0.168 | 0.163 | 0.152 |
| 1.3 | 0.165 | 0.160 | 0.152 |
| 1.2 | 0.165 | 0.157 | 0.151 |

In this case, the optical fiber preform had a diameter of 140 mm. The residence time in the drawing furnace is preferably 4 hours or less and more preferably 3 hours or less.

### Example 1

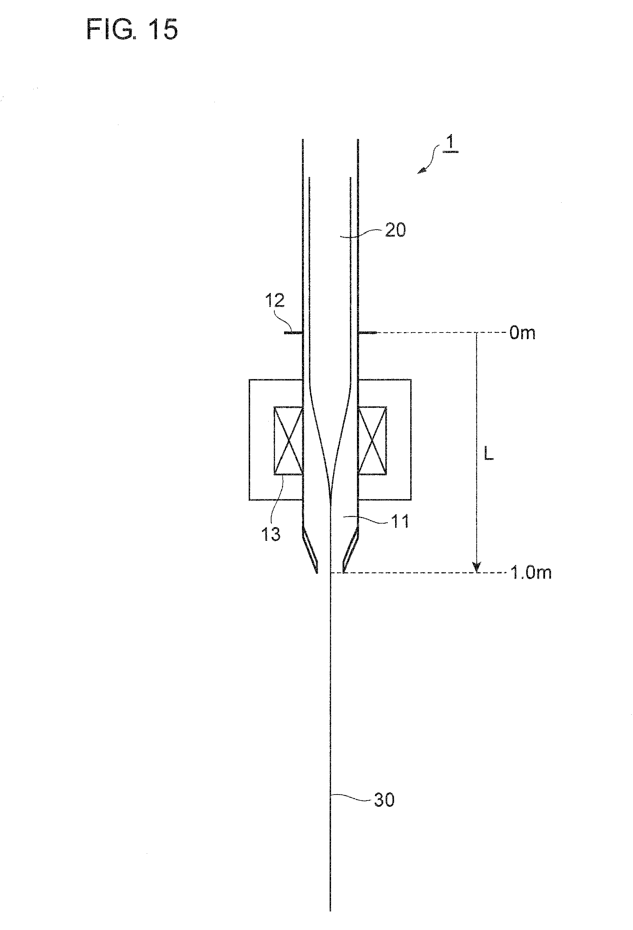

Optical fiber preforms each including a core that has an average potassium concentration of 5 atomic ppm were drawn with a drawing apparatus illustrated in Fig. 15. The drawing furnace 11 had a length of 1.0 m. In this case, attenuations of the optical fiber preforms having different sizes (diameters) are described in Table V.

**Table V**

| Drawing speed m/min | Attenuation dB/km | | | | |
|---|---|---|---|---|---|
| | 200 (mm, in diameter) | 140 (mm, in diameter) | 90 (mm, in diameter) | 70 (mm, in diameter) | 50 (mm, in diameter) |
| 300 | 0.165 | 0.166 | 0.168 | 0.171 | 0.173 |
| 600 | 0.166 | 0.167 | 0.168 | 0.171 | 0.172 |
| 800 | 0.166 | 0.167 | 0.168 | 0.172 | 0.174 |
| 1000 | 0.166 | 0.168 | 0.166 | 0.171 | 0.176 |
| 1200 | 0.168 | 0.168 | 0.166 | 0.170 | 0.174 |

The drawing furnace has a short length, so that the resulting fiber is readily exposed to air. It is thus speculated that the length of time the fiber is maintained at 1500°C or higher is reduced. Hence, the residence time in the furnace can be reduced even when the optical fiber preforms are drawn at low linear velocity, thereby reducing the attenuation.

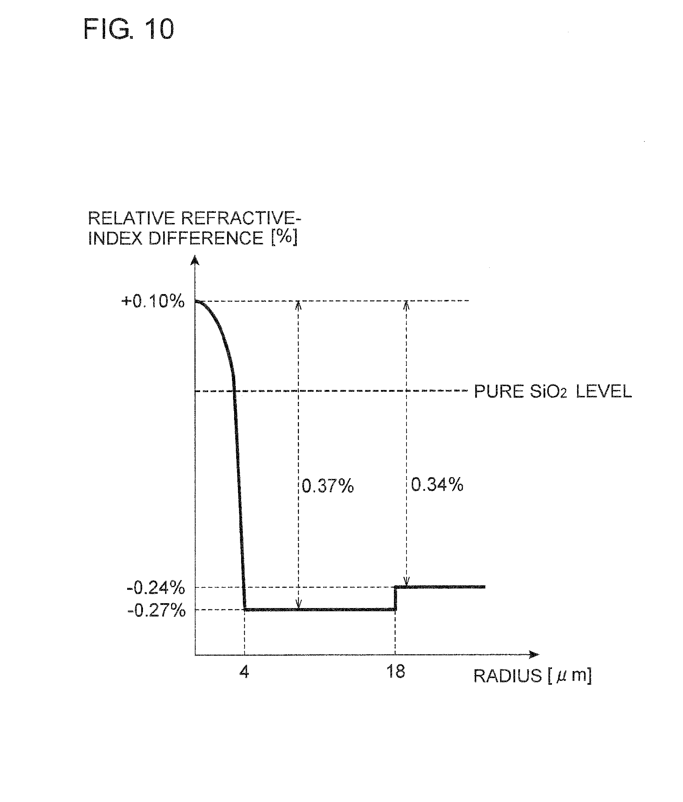

Each of the optical fibers in Example 1 had a refractive index profile (the vertical axis representing the relative refractive-index difference with respect to the refractive index of pure SiO₂) illustrated in Fig. 10. The optical fibers had characteristics as described in Table VI.

**Table VI**

| | | Example 1 | Example 2 |
|---|---|---|---|
| Chromatic dispersion at 1550 nm | ps/nm/km | +15.7 - +16.0 | +21.1 |
| Dispersion slope at 1550 nm | ps/nm²/km | +0.054 - +0.056 | +0.061 |
| Zero-dispersion wavelength do | nm | 1308 - 1312 | |
| Dispersion slope at d₀ | ps/nm²/km | +0.081 - +0.084 | |
| Effective area at 1550 nm | µm² | 81 - 84 | 141 |
| Mode field diameter at 1550 nm | µm | 10.0 - 10.4 | 12.8 |
| Mode field diameter at 1310 nm | µm | 8.9 - 9.3 | |
| Fiber cutoff wavelength (2 m) | nm | 1290 - 1330 | 1580 |
| Cable cutoff wavelength (22 m) | nm | 1210 - 1250 | 1480 |
| Polarization mode dispersion (C & L bands) | ps/√km | 0.05 - 0.10 | 0.01 |
| Nonlinear coefficient (at 1550 nm, random polarization state) | (W^{.}km)⁻¹ | 1.0 - 1.2 | 0.6 |

As described above, the resulting optical fibers had low attenuations and other satisfactory characteristics.

### Example 2

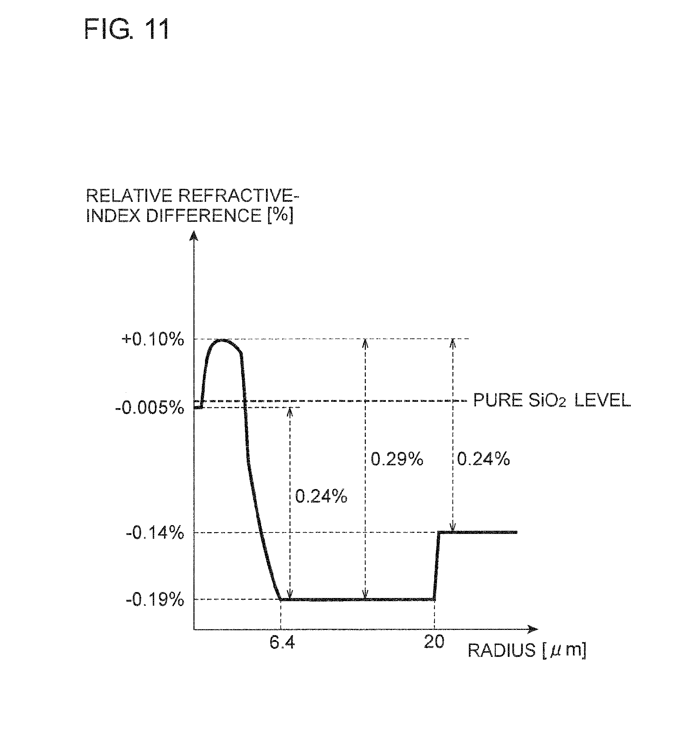

An optical fiber in Example 2 was produced by drawing an optical fiber preform at a linear velocity of 1700 m/min and a drawing tension of 50 g (0.49 N), the optical fiber preform having a diameter of 125 mm, a potassium-containing core, and a refractive index profile different from that in Example 1. The optical fiber had a refractive index profile (the vertical axis representing the relative refractive-index difference with respect to the refractive index of pure SiO₂) as illustrated in Fig. 11. The optical fiber had characteristics as described in Table VI. The core had an average potassium concentration of 5 atomic ppm. The attenuation (at a wavelength of 1300 nm) was 0.280 dB/km. The attenuation (at a wavelength of 1380 nm) was 0.320 dB/km. The attenuation (at a wavelength of 1550 nm) was 0.155 dB/km. As described above, the resulting optical fiber had a low attenuation and other satisfactory characteristics.

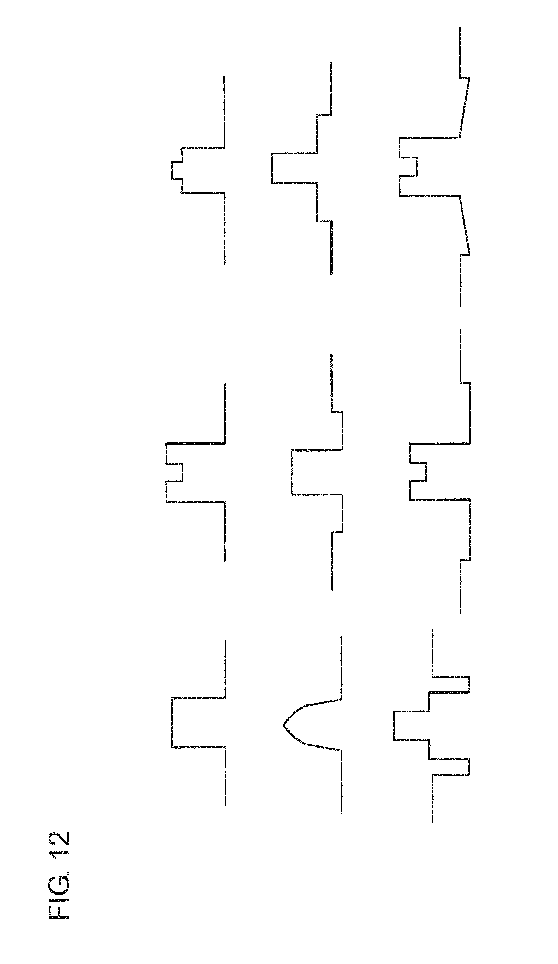

The core part may have a diameter of 6 µm to 20 µm. The relative refractive-index difference between the core part and the cladding part may be in the range of 0.2% to 0.5%. When the cladding part contains fluorine, the average refractive index of the cladding part is lower than the refractive index of the core part, the core part is made of silica-based glass which contains an alkali metal element as well as chlorine and fluorine elements, which are halogens, and the halogen concentration is the highest of all the additional elements in the core part, the attenuation is reduced. Furthermore, in the optical fiber preform, each of the core part and the cladding part may have a refractive-index structure. For example, while refractive index profiles as illustrated in Fig. 12 may be used, the present invention is not limited thereto.

## Claims

1. A method for producing an optical fiber, comprising:
drawing a silica-based optical fiber preform that includes a core part and a cladding part, the core part having an average concentration of an alkali metal element of 5 atomic ppm or more,
wherein the time the temperature of glass is maintained at 1500°C or higher during the drawing is 110 minutes or less.

2. The method for producing an optical fiber according to Claim 1,
wherein the average concentration of the alkali metal element in the core part of the optical fiber preform is 500 atomic ppm or less.

3. The method for producing an optical fiber according to Claim 1 or 2,
wherein the core part of the optical fiber preform contains a halogen element, and wherein the average concentration of an additive element other than the alkali metal element or the halogen atom in the core part is equal to or lower than the average concentration of the halogen element in the core part.

4. The method for producing an optical fiber according to Claim 3,
wherein the average concentration of the halogen element in the core part of the optical fiber preform is in the range of 1,000 atomic ppm to 20,000 atomic ppm.

5. The method for producing an optical fiber according to any one of Claims 1 to 4, wherein the alkali metal element is potassium.

6. The method for producing an optical fiber according to any one of Claims 1 to 5, wherein the drawing speed during the drawing of the optical fiber preform is 1200 m/min or more.

7. The method for producing an optical fiber according to Claim 6,
wherein the drawing speed during the drawing of the optical fiber preform is 2500 m/min or less.

8. The method for producing an optical fiber according to any one of Claims 1 to 7, wherein the optical fiber preform has a diameter of 70 mm to 170 mm.

9. The method for producing an optical fiber according to any one of Claims 1 to 8, wherein a force applied to a glass portion during the drawing of the optical fiber preform is in the range of 0.29 N to 1.47 N.

10. The method for producing an optical fiber according to any one of Claims 1 to 9,
wherein in the drawing of the optical fiber preform, the drawn glass fiber having a diameter of 200 µm or less is heated at 1500°C or higher for 0.3 seconds or less, and
wherein an individual position of the optical fiber preform stays in a drawing furnace for 4 hours or less.

11. The method for producing an optical fiber according to any one of Claims 1 to 10,
wherein any position of the optical fiber preform stays in the drawing furnace for 4 hours or less.

12. A method for producing an optical fiber that includes a core part and a cladding part surrounding the core part,
wherein the core part of the optical fiber preform has an average concentration of an alkali metal of 5 atomic ppm or more and an average concentration of a halogen element of 1000 atomic ppm or more,
the average concentration of an additive element other than the alkali metal or the halogen element in the core part is equal to or lower than the average concentration of the halogen element in the core part,
the optical fiber preform has a diameter of 70 mm to 170 mm,
the drawing speed of the optical fiber when the optical fiber is drawn is 600 m/min or more, and
a force applied to a glass portion is in the range of 0.29 N to 1.47 N.

13. The method for producing an optical fiber according to Claim 12,
wherein the drawing speed of the optical fiber is in the range of 1200 m/min to 3000 m/min.

14. An optical fiber produced by the method for producing an optical fiber according to Claim 1,
wherein the optical fiber has an attenuation of 0.18 dB/km or less at 1550 nm.
